## Europäisches Patentamt

## European Patent Office

## Office européen des brevets

(11) Numéro de publication: **0 130 144**

**B1**

(12) **FASCICULE DE BREVET EUROPÉEN**

(45) Date de publication du fascicule du brevet: 22.07.87

(51) Int. Cl.⁴: **A 23 L 2/40**

(21) Numéro de dépôt: **84810194.5**

(22) Date de dépôt: **24.04.84**

(54) **Mélange effervescent à dégagement gazeux prolongé et son utilisation pour la préparation de boissons gazeuses.**

(30) Priorité: 24.06.83 CH 3468/83
24.11.83 CH 6308/83

(43) Date de publication de la demande:
02.01.85 Bulletin 85/1

(45) Mention de la délivrance du brevet:
22.07.87 Bulletin 87/30

(84) Etats contractants désignés:
AT BE CH DE FR GB IT LI LU NL SE

(56) Documents cité:
BE-A-753 262
FR-A-2 107 697
GB-A-1 109 344
GB-A-1 270 781
US-A-3 082 091
US-A-3 667 962
US-A-3 881 026

FOOD TECHNOLOGY, vol. 27, no. 11, novembre
1973, pages 34-44; J.A. BAKAN:
"Microencapsulation of foods and related
products"

(73) Titulaire: **DRIDRINKS N.V., De Ruyterkade 62,
Curaçao N.A. (NL)**

(72) Inventeur: **Lavie, Louis, 6 avenue Dapples, CH- 1006
Lausanne (CH)**

(74) Mandataire: **Vuille, Roman, c/o KIRKER & Cie
S.A. 14, rue du Mont- Blanc Case Postale 872,
CH- 1211 Genève 1 (CH)**

## Description

L'invention se réfère à un procédé pour la préparation d'un mélange effervescent pulvérulent à dégagement gazeux prolongé comprenant un sel ou mélange de sels d'acide carbonique et un acide minéral et/ou au moins un acide organique, destiné à la préparation de boissons gazeuses.

L'invention se réfère également à une composition pulvérulente, granulée ou comprimée hydrosoluble pour la préparation de boissons gazeuses, caractérisée en ce qu'elle contient un mélange effervescent pulvérulent ou granulé à dégagement gazeux prolongé obtenu par le procédé susmentionné.

L'invention se réfère, finalement, à un procédé de préparation d'une liqueur destinée à l'enrobage des constituants du mélange gazeux à dégagement gazeux prolongé défini ci-dessus.

De nombreuses compositions pulvérulentes de base servant aussi bien à la préparation de boissons médicamenteuses ou simplement désaltérantes sont actuellement commercialisées.

L'obtention de boissons gazeuses s'effectue le plus généralement par dissolution de $CO_2$ sous pression relativement élevée dans le produit liquide à consommer. La conservation de la dose initiale de gaz dissous, responsable du caractère "piquant" et désaltérant de telles boissons, nécessite l'emploi de récipients hermétiquement fernés, résistant à la surpression interne et par conséquent relativement lourds et encombrants, même pour de petites doses.

On connaît des mélanges effervescents pulvérulents qui, par simple addition d'eau, permettent d'obtenir un effet du même type que celui décrit ci-dessus, à la différence près qu'une sursaturation de la phase liquide n'est guère possible, dans les conditions usuelles de préparation d'une telle boisson. A l'aide des mélanges connus, il est exclu de préparer des boissons présentant un dégagement continu, prolongé durant tout le temps nécessaire à la consommation de $CO_2$. Une fois le premier dégagement constaté, la boisson ainsi préparée perd rapidement son caractère, pour devenir "plate", voire insipide.

Diverses méthodes ont été proposées pour résoudre de tels problèmes. Le brevet U.S.-A-3 667 962 par exemple décrit une méthode de préparation d'une matrice poreuse à base de mono-, di- ou polysaccharides hydrosolubles, de dextrine de préférence, au sein de laquelle sont dispersés les ingrédients choisis, acides et carbonates notamment. Une fois dissoute dans l'eau, une telle matrice libère des ingrédients qui réagissent entre eux, pour donner lieu à une libération de $CO_2$. Le dégagement gazeux constaté ne dure guère au-delà de quelques minutes seulement, l'effet retard recherché n'étant pas atteint. Ce procédé exclut en outre le recours à des saccharides cristallins, tel le sucre cristallisé.

Il a été découvert que par l'emploi d'un mélange effervescent dont l'un des constituants au moins est enrobé d'un film comprenant un polysaccharide macromoléculaire hydrosoluble, ou un mélange de tels polysaccharides, choisis parmi la gomme arabique et la gomme adragante, on peut obtenir une boisson gazeuse au sein de laquelle le dégagement de gaz ($CO_2$) se prolonge durant toute la période correspondant au temps moyen nécessaire à la consommation.

En l'absence d'un tel enrobage, en effet, le mélange effervescent libère la totalité du gaz dès son contact avec l'eau, jusqu'à saturation de la phase aqueuse en $CO_2$, l'excédent de gaz se perdant alors dans l'atmosphère.

Certains polymères hydrosolubles peuvent conduire à l'apparition de phénomènes annexes tel un trouble blanchâtre ou une coloration de la mousse. De tels phénomènes sont parfaitement acceptables dans les cas de boissons opaques ou fortement colorées. Dans d'autres cas cependant, notamment lorsque l'on désire obtenir une boisson gazeuse limpide et peu colorée, il est préférable d'utiliser un polysaccharide macromoléculaire hydrosoluble à titre de polymère hydrosoluble.

L'invention a donc pour objet plus particulier un procédé pour la préparation d'une liqueur destinée à l'enrobage des constituants d'un mélange effervescent pulvérulent à dégagement gazeux prolongé comprenant un sel ou un mélange de sels d'acide carbonique et un acide minéral et/ou au moins un acide organique tel que défini à la revendication 1.

Elle a également pour autre objet particulier un procédé pour la préparation d'un mélange effervescent pulvérulent à dégagement gazeux prolongé comprenant un sel ou mélange de sels d'acide carbonique et un acide minéral et/ou au moins un acide organique, caractérisé en ce qu'on enrobe séparément les particules de sel ou de mélange de sels d'acide carbonique, et/ou d'acide minéral et/ou d'acide organique à l'aide de la liqueur obtenue au moyen du procédé selon la revendication 1 et on sèche ensuite les particules ainsi enrobées.

Comme indiqué, à titre de polysaccharide macromoléculaire hydrosoluble, on utilise de la gomme arabique ou de la gomme adragante, ou un mélange de ces deux gommes.

De tels produits sont connus et peuvent être obtenus auprès du commerce spécialisé. Ils sont parfaitement tolérés par l'organisme, non toxiques et par conséquent utilisables sans restriction particulière dans des compositions pulvérulentes destinées à la préparation de boissons. Les proportions de film d'enrobage par rapport au mélange effervescent seront calculées de façon à permettre un dégagement gazeux prolongé et total, le plus généralement de l'ordre de 15 à 40 minutes par exemple. L'enrobage du mélange effervescent pulvérulent s'effectue à l'aide des techniques usuelles telles que la pulvérisation ou le procédé dit à lit fluidisé.

A titre de mélange effervescent, on peut utiliser les sels ou les mélanges de sels alcalins ou alcalino-terreux d'acide carbonique et les acides ou les mélanges d'acides minéraux ou organiques actuellement connus et employés dans l'industrie alimentaire ou pharmaceutique. On utilise par exemple du bicarbonate de sodium en mélange avec un ou plusieurs acides organiques tels l'acide tartrique et l'acide citrique, ou avec un acide minéral tel que l'acide phosphorique.

Selon l'invention, on prépare un mélange effervescent pulvérulent à dégagement gazeux prolongé en dissolvant premièrement le polysaccharide macromoléculaire dans un sirop de saccharose concentré. On utilise le plus généralement un sirop à environ 100/60 à 100/150 en poids, le polysaccharide choisi étant dissous dans le sirop concentré à raison d'environ 100 parties de polysaccharide pour environ 160 à 625 parties en poids de sirop.

Une fois la liqueur homogène obtenue, on lui ajoute progressivement de l'alcool éthylique à 95%, à raison d'environ 1 volume d'alcool pour 1 volume d'eau utilisée pour la préparation de sirop concentré. On obtient ainsi une liqueur blanchâtre qu'il peut être opportun, selon les cas, de stabiliser en la maintenant en vase clos, durant 1 heure ou plus, à une température de l'ordre de 50°C environ. 2 Un colorant alimentaire peut être ajouté à la liqueur de façon à colorer le produit enrobé. Cette coloration permet, de plus, de contrôler la régularité de l'enrobage.

On peut également incorporer à la liqueur une huile essentielle ou un mélange d'huiles essentielles destiné à aromatiser le mélange pulvérulent résultant de l'enrobage. Dans de tels cas, lesdites huiles essentielles peuvent être avantageusement incorporées à la liqueur après dissolution dans la portion d'alcool éthylique mentionnée ci-dessus.

Les proportions peuvent être modifiées en fonction de l'origine et de la nature des matières premières, mais la proportion de sucre doit rester suffisante pour éviter la prise en masse du polysaccharide au contact de l'alcool.

L'application de cette liqueur sur l'un des constituants destinés à provoquer l'émission de $CO_2$ par réaction, peut s'effectuer à l'aide des techniques usuelles, telles que la pulvérisation ou le procédé dit à lit fluidisé.

Ces mélanges effervescents ainsi enrobés peuvent être utilisés comme base de gazéification des boissons acidulées les plus diverses, présentées sous formes pulvérulentes, granulées ou comprimées.

Le consommateur des boissons ainsi gazéifiées peut moduler, suivant ses goûts, l'intensité du débit de $CO_2$ et du piquant qui en résulte. Il lui suffit d'agiter, très légèrement, une paille dans la boisson pour obtenir l'intensification de la gazéification.

Sans agitation, le débit de $CO_2$ est constant mais sans excès; l'on observe très peu de gaz s'échappant en surface. Le buveur qui oublie son verre durant dix minutes ne se trouvera pas en face d'une boisson plate, mais qui sera saturée en fonction de la pression atmosphérique. La moindre agitation augmentera la production de $CO_2$ et donnera un "piquant" similaire à celui des boissons en bouteilles gazéifiées sous plusieurs atmosphères de pression.

Ces résultats sont obtenus en utilisant un mélange effervescent contenant 1,04 gr de bicarbonate et de monophosphate de sodium pour 100 ml de boisson.

En plus des ingrédients mentionnés ci-dessus, la composition pulvérulente pour la préparation de boissons gazeuses peut également contenir, dans des proportions variables et fonction du goût et de l'arôme recherchés, des huiles essentielles adsorbées sur un support solide, huiles essentielles de cannelle, de citron ou d'orange par exemple. Elle peut en outre contenir des colorants alimentaires appropriés, du sucre, de préférence du sucre instantané, ou tout autre additif nécessaire à l'obtention des effets organoleptiques recherchés.

Le mélance de tous les ingrédients nécessaires sera effectué dans des proportions telles que 2,5 g à 14 g, suivant qu'il s'agit d'une composition Diet ou Soft, suffisent à la préparation de 100 ml d'une boisson gazeuse.

Les exemples ci-après illustreront l'invention de façon plus détaillée.


## Exemple 1 (comparatif)

2 équivalents de bicarbonate de sodium ont été enrobés au moyen d'un film polymère hydrosoluble EUDRAGIT E 100 (marque déposée de la maison Röhm & Haas, Pharma GmbH, Darmstadt, République Fédérale d'Allemagne), selon le procédé dit du lit fluidisé (proportions: env. 25 g EUDRAGIT E 100 pour 100 kg de produit de base).

Le produit pulvérulent ainsi obtenu a ensuite été mélangé à l équivalent d'acide tartrique.


## Exemple 2 (comparatif)

1 équivalent d'acide tartrique pulvérulent a été enrobé au moyen d'un film polymère hydrosoluble comme indiqué à l'exemple 1. Le produit pulvérulent ainsi obtenu a ensuite été mélangé à 2 équivalents de bicarbonate de sodium.

**Exemple 3 (comparatif)**

On a préparé un mélange d'acide tartrique (1 équivalent) et de bicarbonate de sodium (2 équivalents) dont chacun des éléments a été enrobé séparément d'un film polymère hydrosoluble comme indiqué à l'exemple 1.

En remplaçant dans les exemples ci-dessus tout ou partie de l'acide tartrique par une quantité équivalente d'acide citrique, on a observé un effet analogue.

Il en a été de même lorsqu'on a remplacé tout ou partie de l'acide organique susmentionné par une quantité équivalente de monophosphate de sodium.

**Exemple 4**

Dans un sirop de sucre obtenu par la dissolution de 25 g de sucre dans 15 g d'eau, on incorpore 25 g de gomme arabique.

Lorsque le mélange est devenu parfaitement homogène, on ajoute 15 ml d'alcool éthylique pur à 95%. La liqueur prend alors une teinte blanchâtre.

Il est possible de colorer cette liqueur, si on le désire, par exemple à l'aide de caramel d'amidon de maïs ou de colorant caramel.

Si désiré également, le mélange obtenu peut être maintenu durant 1 heure à 50°C en vas clos, avant de procéder à l'enrobage.

On enrobe ensuite du bicarbonate de sodium pulvérulent en mélangeant intimement les particules avec la liqueur ainsi obtenue, à raison de 1 ml de liqueur pour environ 10 g de bicarbonate.

Ce mélange, lorsqu'il devient parfaitement homogène, est pressé à travers un moule ou un tamis, de façon à former des granulés réguliers de la section désirée qui sont ensuite séchés dans un four à air chaud, réglé à 50°C, pendant deux à trois heures.

**Exemple 5**

Dans un sirop contenant 25 g de sucre et 25 g de caramel de sucre dissous dans 75 g d'eau, on ajoute 20 g de gomme adragante. Lorsque le mélange est devenu parfaitement homogène, on incorpore 25 ml d'alcool éthylique à 95%. Après avoir été maintenue durant 1 heure au moins à 50°C en vase clos, la liqueur ainsi obtenue est ensuite traitée comme indiqué à l'exemple 4. Si désiré, la coloration de la liqueur peut être renforcée à l'aide de colorant caramel.

On mélange 2 équivalents de granulés de bicarbonate de sodium enrobé avec un équivalent d'acide tartrique. Le mélange effervescent ainsi obtenu, placé en milieu aqueux, dégage du $CO_2$ pendant une période de l'ordre de 20 à 30 minutes, ce qui paraît suffisant. Un enrobage en couches plus épaisses augmenterait cette durée, si on le désirait.

Par la même méthode, il serait également possible d'enrober des particules d'acide tartrique.

**Exemple 6**

En reprenant le procédé de l'exemple 4, on a préparé une liqueur à base des ingrédients suivants:

| | |
|---|---|
| sucre | 40 g |
| caramel | 10 g |
| gomme arabique | 40 g |
| gomme adragante | 10 g |
| eau | 75 ml |
| alcool éthylique à 95% | 30 ml |

Une fois la liqueur homogène obtenue, on a procédé à l'enrobage du mélange d'acides ci-après, à raison de 5 ml de liqueur pour 50 g de mélange d'acides:

| | | | |
|---|---|---|---|
| acide phosphorique | 3 g | = | 6 % |
| acide tartrique | 30 g | = | 60 % |
| acide citrique | 17 g | = | 34 % |
| | 50 g | | 100 % |

Le séchage s'effectue sur un treillis à fines mailles avec un courant d'air chaud.

Il a en outre été observé que la liqueur utilisée ci-dessus aux exemples 4 à 6 constitue une excellente protection pour les produits hygroscopiques. Elle peut être de ce fait avantageusement utilisée soit comme produit d'enrobage, soit comme support dans les industries alimentaires, par exemple pour la fabrication de bonbons.

## Revendications

1. Procédé pour la préparation d'une liqueur destinée à l'enrobage des constituants d'un mélange effervescent pulvérulent à dégagement gazeux prolongé comprenant un sel ou un mélange de sels d'acide carbonique et un acide minéral et/ou au moins un acide organique, caractérisé en ce que

a) on dissout environ 100 parties en poids d'un polysaccharide macromoléculaire hydrosoluble ou d'un mélange de polysaccharides macromoléculaires hydrosolubles choisis parmi la gomme arabique et la gomme adragante dans environ 160 à 625 parties en poids d'un sirop de saccharose, le cas échéant de caramel de sucre dans l'eau à environ 100/ 60 à 100/150 en poids (rapport saccharose, caramel de sucre/eau);

b) on ajoute ensuite à la solution obtenue ci-dessus un volume d'alcool éthylique à 95 % compris entre environ 33 % et environ 100 % du volume d'eau utilisé; et

c) on maintient le mélange ainsi obtenu en vase clos durant 1 heure ou plus à une température de l'ordre de 50° C.

2. Procédé selon la revendication 1, caractérisé en ce qu'on dissout environ 100 parties en poids de gomme arabique dans environ 160 parties en poids d'un sirop de saccharose dans l'eau à 100/60 en poids, en ce qu'on ajoute ensuite à la solution obtenue un volume d'alcool éthylique à 95 % correspondant à environ 100 % du volume d'eau utilisé et en ce qu'on maintient le mélange ainsi obtenu en vase clos durant 1 heure à 50° C.

3. Procédé selon la revendication 1, caractérisé en ce qu'on dissout environ 100 parties en poids de gomme adragante dans environ 625 parties en poids d'un sirop de saccharose et de caramel de sucre dans l'eau à 100/150 en poids, en ce qu'on ajoute ensuite à la solution obtenue un volume d'alcool éthylique à 95 % correspondant à environ 33 % du volume d'eau utilisé et en ce qu'on maintient le mélange obtenu en vase clos durant 1 heure à 50° C.

4. Procédé selon la revendication 1, caractérisé en ce qu'on dissout environ 100 parties en poids d'un mélange contenant 80 parties en poids de gomme arabique et 20 parties en poids de gomme adragante dans environ 250 parties d'un sirop de saccharose et de caramel de sucre dans l'eau à 100/ 150 en poids, en ce qu'on ajoute ensuite à la solution obtenue un volume d'alcool éthylique à 95 % correspondant à environ 40 % du volume d'eau utilisé et en ce qu'on maintient le mélange obtenu en vase clos durant 1 heure à 50° C.

5. Procédé pour la préparation d'un mélange effervescent pulvérulent à dégagement gazeux prolongé comprenant un sel ou mélange de sels d'acide carbonique et un acide minéral et/ou au moins un acide organique, caractérisé en ce qu'on enrobe séparément les particules de sel ou de mélange de sels d'acide carbonique, et/ou d'acide minéral et/ou d'acide organique à l'aide de la liqueur obtenue au moyen du procédé selon la revendication 1 et on sèche ensuite les particules ainsi enrobées.

6. Procédé selon la revendication 5, caractérisé en ce que le sel d'acide carbonique est un carbonate ou un bicarbonate alcalin ou un carbonate alcalino-terreux ou un sel d' acide carbonique et d'un acide aminé.

7. Procédé selon la revendication 5, caractérisé en ce que l'acide organique est l'acide citrique et/ou l'acide tartrique, et que l'acide minéral est l'acide phosphorique.

8. Procédé selon l'une des revendications 5 à 7, caractérisé en ce que l'enrobage est effectué par simple mélange ou par pulvérisation de liqueur sur les particules à enrober.

9. Composition pulvérulente, granulée ou comprimée hydrosoluble pour la préparation de boissons gazeuses, caractérisée en ce qu'elle contient un mélange effervescent pulvérulent ou granulé à dégagement gazeux prolongé obtenu par le procédé selon l'une des revendications 5 à 8.

## Patentansprüche

1. Verfahren zum Herstellen einer Lösung zum Ueberziehen von Bestandteilen eines Brausepulver-Gemisches welches Kohlensäure abgibt, welches ein kohlensaures Salz oder ein Gemisch aus solchen Salzen und Salzen von Mineralsäuren und/oder wenigstens ein Salz einer organischen Säure enthält, dadurch gekennzeichnet, dass

a) man etwa 100 Gewichtsteile eines makromolekularen, wasserlöslichen polysacharids, oder ein Gemisch aus makromolekularen, wasserlöslichen polysachariden von der Art Gummiarabikum und der art Tragantgummi, in etwa 160 bis 625 Gewichtsteilen eines Sacharosesirups, oder von Zuckerkaramel in einem Gewichtsverhältnis-Bereich Zucker zu Wasser von 100 zu 60 bis 100 zu 150 löst;

b) man da nach der erhaltenen Lösung eine Menge 95 % igen Aethylalkohol, die 33 % bis 100 % des verwendeten Wassers entspricht, zufügt; und

c) man die so erhaltene Mischung während einer Stunde oder länger in einem geschlossenen Gefäss, auf einer Temperatur von etwa 50° C hält.

2. Verfahren nach Anspruch 1, dadurch gekennzeichnet, dass man eine Lösung von etwa 100 Gewichtsteilen Gummiarabikum in etwa 160 Gewichtsteilen Sacharosesirup, im Verhältnis 100 zu 60 Gewichtsteilen mit Wasser verdünnt, dass man darnach der erhaltenen Lösung eine Menge 95 % igen Aethylalkohol beigibt, welche ungefähr 100 Volumenprozent des verwendeten Wassers entspricht und dass man die so erhaltene Mischung während einer Stunde in einem geschlossenen Gefäss bei 50° C hält.

3. Verfahren nach Anspruch 1, dadurch gekennzeichnet, dass man eine Lösung von etwa 100 Gewichtsteilen Taragantgummi in etwa 625 Gewichtsteilen eines Sirups aus Sacharose und Zuckerkaramel im Gewichtsverhältnis von 100 zu 150 mit Wasser mischt und indem man darnach der erhaltenen Lösung eine Menge 95% igen Aethylalkohol bemischt, das etwa 33 % des Volumens des Wassergehalts der Lösung entspricht, und dass man die so erhaltene Mischung während einer Stunde in einem geschlossenen Gefäss bei 50° C hält.

4. Verfahren nach Anspruch 1, dadurch gekennzeichnet, dass man etwa 100 Gewichtsteile einer Mischung, welche 80 Gewichtsteile Gummiarabikum und 20 Gewichtsteile Tarantgummi enthält, mit etwa 250 Teilen eines Sirups aus Sacharose und Zuckerkaramel mischt und darnach dieser Mischung im Verhältnis von 100 zu 150 Gewichtsteilen mit Wasser mischt, und dass man darnach der erhaltenen Lösung eine Menge 95% igen Aethylalkohol beimischt, das etwa 40 % des Volumens des Wassersgehalts der Lösung enspricht und dass man die so erhaltene Mischung während einer Stunde in einem geschlossenen Gefäss bei 50° C hält.

5. Verfahren zum Herstellen eines Brausepulver-Gemisches welches Kohlensäure abgibt, welches ein Salz der Kohlensäure oder ein Gemisch aus solchen Salzen und Salzen von Mineralsäuren und/oder wenigstens ein Salz einer organischen Säure enthält, dadurch gekennzeichnet, dass die Teilchen des Salzes der Kohlensäure und/oder des Gemischs solcher Salze, und/oder der Salze der Mineralsäure, und/oder jener der wenigstens einen organischen Säuren, mit Hilfe der nach dem Verfahren von Anspruch 1 erhaltenen Lösung getrennt überzogen und die Teilchen darnach getrocknet werden.

6. Verfahren nach Anspruch 5, dadurch gekennzeichnet, dass das Salz der Kohlensäure ein Karbonat oder ein alkalisches Bikarbonat oder ein erdalkalisches Karbonat oder ein Salz der Kohlensäure und einer Aminosäure ist.

7. Verfahren nach Anspruch 5, dadurch gekennzeichnet, dass die organische Säure Zitronensäure und/oder Weinsäure ist und dass die Mineralsäure phosphorsäure ist.

8. Verfahren nach einem der Ansprüche 5 bis 7, dadurch gekennzeichnet, dass das Ueberziehen durch einfaches Mischen mit, oder durch Zerstäuben der Lösung über die zu überziehenden Teilchen erfolgt.

9. Pulverförmige Mischung, für das Herstellen von kohlensäurehaltigen Getränken, als Granulat oder wasserlöslich gepresst, dadurch gekennzeichnet, dass das Gemisch pulverförmiges oder granuliertes Brausegemisch enthält, welches Kohlesäure abgibt und welches nach einem der Ansprüche 5 bis 8 hergestellt wurde.

## Claims

1. A process for the preparation of a liquor for coating the constituents of a pulverulent effervescent mixture which releases gas over a prolonged period, comprising a carbonic acid salt or a mixture of carbonic acid salts and a mineral acid and/or at least one organic acid, characterized in that
a) about 100 parts by weight of a water-soluble macromolecular polysaccharide or a mixture of watersoluble macromolecular polysaccharides selected from the group comprising gum arabic and gum tragacanth are dissolved in about 160 to 625 parts by weight of a syrup of sucrose, if appropriate of burnt sugar, in water in proportions of about 100/60 to 100/150 by weight (ratio of sucrose, burnt sugar/ water);
b) 95% ethyl alcohol is then added to the solution obtained above in a volume of between about 33% and about 100% of the volume of water used; and
c) the resulting mixture is kept in a closed vessel for at least 1 hour at a temperature of the order of 50°C.

2. The process according to Claim 1, characterized in that about 100 parts by weight of gum arabic are dissolved in about 160 parts by weight of a syrup of sucrose in water in proportions of 100/60 by weight, in that 95% ethyl alcohol is then added to the resulting solution in a volume corresponding to about 100% of the volume of water used, and in that the resulting mixture is kept in a closed vessel for 1 hour at 50°C.

3. The process according to Claim 1, characterized in that about 100 parts by weight of gum tragacanth are dissolved in about 625 parts by weight of a syrup of sucrose and burnt sugar in water in proportions of 100/ 150 by weight, in that 95% ethyl alcohol is then added to the resulting solution in a volume corresponding to about 33% of the volume of water used, and in that the mixture obtained is kept in a closed vessel for 1 hour at 50°C.

4. The process according to Claim 1, characterized in that about 100 parts by weight of a mixture containing 80 parts by weight of gum arabic and 20 parts by weight of gum tragacanth are dissolved in about 250 parts of a syrup of sucrose and burnt sugar in water in proportions of 100/150 by weight, in that 95% ethyl alcohol is then added to the resulting solution in a volume corresponding to about 40% of the volume of water used, and in that the mixture obtained is kept in a closed vessel for 1 hour at 50°C.

5. A process for the preparation of a pulverulent effervescent mixture which releases gas over a prolonged period, comprising a carbonic acid salt or a mixture of carbonic acid salts and a mineral acid and/or at least one organic acid, characterized in that the particles of carbonic acid salt or mixture of carbonic acid salts and/or mineral acid and/or organic acid are separately coated with the liquor obtained by means of the process according to Claim 1, and the particles coated in this way are then dried.

6. The process according to Claim 5, characterized in that the carbonic acid salt is an alkali metal carbonate or bicarbonate, an alkaline earth metal carbonate or a carbonic acid salt of an amino acid.

7. The process according to Claim 5, characterized in that the organic acid is citric acid and/or tartaric acid and in that the mineral acid is phosphoric acid.

8. The process according to one of Claims 5 to 7, characterized in that the coating is effected by simple mixing or by spraying liquor onto the particles to be coated.

9. A water-soluble composition in the form of powder, granules or tablets for the preparation of fizzy drinks, characterized in that it contains a pulverulent or granular effervescent mixture which releases gas over a prolonged period, obtained by the process according to one of Claims 5 to 8.